Europäisches Patentamt

European Patent Office

Office européen des brevets

(19)

(11) Publication number: **0 277 733 B1**

# EUROPEAN PATENT SPECIFICATION

(12)

(45) Date of publication of patent specification: **15.04.92**

(51) Int. Cl.5: **B60P 1/00**, A01C 3/06, A01D 90/10

(21) Application number: **88300519.1**

(22) Date of filing: **22.01.88**

(54) **Load carrying vehicles.**

(30) Priority: **22.01.87 GB 8701356**
**29.04.87 GB 8710217**

(43) Date of publication of application:
**10.08.88 Bulletin 88/32**

(45) Publication of the grant of the patent:
**15.04.92 Bulletin 92/16**

(84) Designated Contracting States:
**AT BE CH DE ES FR GB IT LI NL SE**

(56) References cited:
BE-A- 793 803       DE-A- 2 821 461
FR-A- 2 270 174      GB-A- 2 007 619
GB-A- 2 036 877      US-A- 3 682 333
US-A- 4 072 272      US-A- 4 415 104

(73) Proprietor: **Barber, John**
**Crossley Farm Crossley Lane**
**Mirfield West Yorkshire WF14 ONX(GB)**

(72) Inventor: **Barber, John**
**Crossley Farm Crossley Lane**
**Mirfield West Yorkshire WF14 ONX(GB)**

(74) Representative: **Stanley, David William et al**
**APPLEYARD LEES & CO. 15 Clare Road Halifax**
**West Yorkshire HX1 2HY(GB)**

EP 0 277 733 B1

## Description

This invention relates to load carrying vehicles, and is concerned particularly although not exclusively with agricultural trailers.

The trailer is an indispensable item for most farmers. Many farmers require trailers of relatively large capacity from time to time, and many farmers own trailers which have a tipping action, to facilitate unloading.

One disadvantage of conventional tipping trailers is that, when they are fully tipped, they have a rather high centre of gravity. This means that a large trailer will require a particularly large tractor to counterbalance it during tipping, and, in any event, the high centre of gravity leads to a relatively low level of stability, as regards the possibility of the trailer over-balancing sideways. Another disadvantage of conventional tipping trailers is that the hydraulic rams that are typically used for the tipping action require a large quantity of hydraulic oil for their operation, and a relatively large hydraulic pump to operate them.

GB-A-2 036 877 discloses a particular type of hydraulic cylinder assembly which may be used in an agricultural trailer having a moveable pusher wall. The cylinder assembly comprises first and second cylinders mounted in series with one another. However, the cylinders are interconnected in a relatively rigid manner, such that they are not well suited to reacting out-of-line forces. Also, the disclosed agricultural trailer is of particularly complicated construction, in that the whole floor of the trailer body is slideably moveable.

Preferred embodiments of the present invention aim to provide trailers which may be improved in the foregoing respects.

According to the present invention there is provided a vehicle comprising a body for receiving a load, a discharge blade slideably mounted in the body, and first and second hydraulic ram means arranged to urge the discharge blade from one end of the body to the other, thereby to discharge a load from the body, through said other end, the first hydraulic ram having a first part which is connected to a fixed point on the vehicle and the second hydraulic ram having a first part which is connected to the discharge blade, characterised in that second parts of the first and second hydraulic rams are connected by support means which is constrained to move along a predetermined path defined by an elongate member with which the support means engages, and at least one of said second parts is pivotally connected to said support means, said first and second parts of each ram being respectively one and the other of the rod and cylinder of the respective ram.

Preferably said support means engages said elongate member adjacent said second parts.

The predetermined path and the path of travel of the discharge blade may be non-parallel.

Preferably each of said hydraulic rams comprises a double-acting hydraulic ram.

Preferably said cylinders are arranged substantially side-by-side.

Preferably the hydraulic rams are arranged to act in opposing senses.

The flow and return sides of the hydraulic rams may be so interconnected that, during actuation of each ram, as hydraulic fluid is supplied to one side of the ram, hydraulic fluid is returned from the other side of the ram.

The hydraulic rams may be of similar capacities, such that, during actuation of the rams to urge the discharge blade from one end of said body to the other, the net consumption of hydraulic fluid by the hydraulic rams is substantially zero.

Preferably the discharge blade or wall comprises a lower portion slideably mounted in the body for longitudinal sliding movement from one end to the opposite end thereof and an upper portion which is pivotally connected to the lower portion for pivotal movement relative thereto about an axis extending transversely of the vehicle from an inclined to an upright position.

The vehicle may be a trailer.

Preferably said elongate member comprises at least part of a drawbar assembly of the trailer.

Preferably at least one of said hydraulic rams is housed, at least partially, in a drawbar assembly of the trailer.

Preferably the vehicle includes a gate pivotally mounted at one end of said body, and means for opening and closing the gate automatically, in synchronism with sliding movement of said blade through said body.

Preferably said gate opening and closing means comprises a hydraulic ram.

The vehicle may include a dispensing means disposed at one end of said body, arranged to dispense material from said body, which material is urged towards said dispensing means, in use, by said discharge blade.

Preferably said dispensing means comprises a rotor arranged to dispense forage or like material from said body.

Said dispensing means may comprise an oscillating dispensing nozzle arranged to be gravity fed with and to dispense fertilizer or other particulate material from said body.

Preferably said dispensing means is readily detachable from said body.

Preferably the vehicle includes means for monitoring the magnitude of a force applied to an end wall of the body or a part attached to an end of the body, and so controlling a pushing force applied to said discharge blade as to maintain said force applied to said end wall or part below a predetermined value.

Preferably the vehicle includes a tandem axle assembly and means for selectively urging either the leading or trailing axle of said tandem axle preferentially towards the ground.

Preferably said support means comprises rollers which engage abutment surfaces within said elongate member to guide the support means during its movement along said predetermined path.

For a better understanding of the invention and to show how the same may be carried into effect, reference will now be made, by way of example, to the accompanying diagrammatic drawings, in which:

Figure 1 is a side view, partly in section, of a trailer, having a pusher blade located at a front end of the trailer;

Figure 2 is a view similar to Figure 1, but showing the pusher blade towards the rear of the trailer;

Figure 3 is a front view of the trailer;

Figure 4 is a part exploded view of a mounting arrangement for an axle;

Figure 5 is a circuit diagram of the hydraulic supply for rams of the trailer;

Figure 6 is a detailed view of a connecting link between two rams;

Figure 7 is a detailed view of a latch arrangement;

Figure 8 is a partial side view of the trailer, shown unloading a pallet;

Figure 9 is a side view of the trailer fitted with silage extension sides;

Figure 10 is a partial side view of the trailer, shown a detachable spreading mechanism fitted thereto;

Figure 11 shows part of the spreader mechanism in elevation;

Figure 12 is a perspective view, part broken away, of the trailer with spreading mechanism attached;

Figure 13 is a side view, partly in section, of another trailer embodying the invention;

Figure 14 is a view similar to Figure 13, but showing a variant of the trailer;

Figure 15 is a partial transverse section through the trailer of Figure 14;

Figure 16 is a diagrammatic perspective view of a trailer vehicle with an unloading mechanism for unloading from the rear of the vehicle;

Figure 17 is a diagrammatic side elevation of a front unloading variant of the trailer vehicle with the unloading mechanism in a contracted position in which the trailer can be fully loaded;

Figure 18 is a diagrammatic side elevation of the trailer vehicle shown in Figure 17 of the drawings with the unloading mechanism in an extended position in which the load in the trailer has been fully discharged;

Figure 19 is a diagrammatic side elevation of a discharge blade or wall of the trailer with the unloading mechanism in a partially or fully contracted position;

Figure 20 is a diagrammatic side elevation of the discharge blade or wall with the unloading mechanism in the extended position for fully discharging the load; and

Figure 21 is a diagrammatic side elevation of a trailer chassis with parts omitted for the sake of clarity.

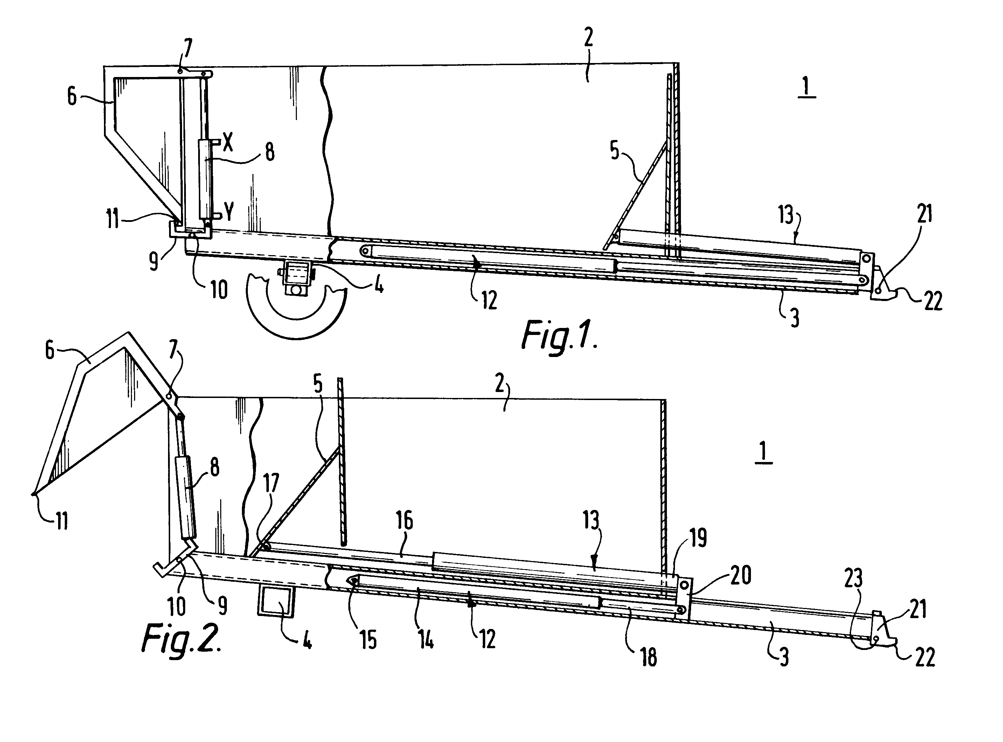

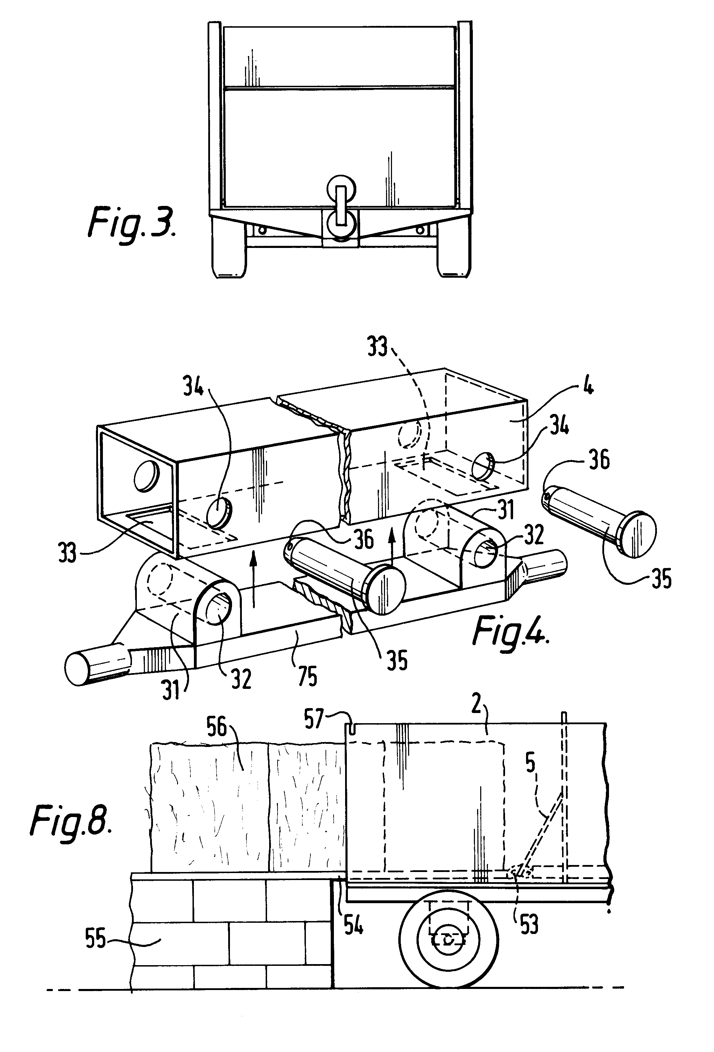

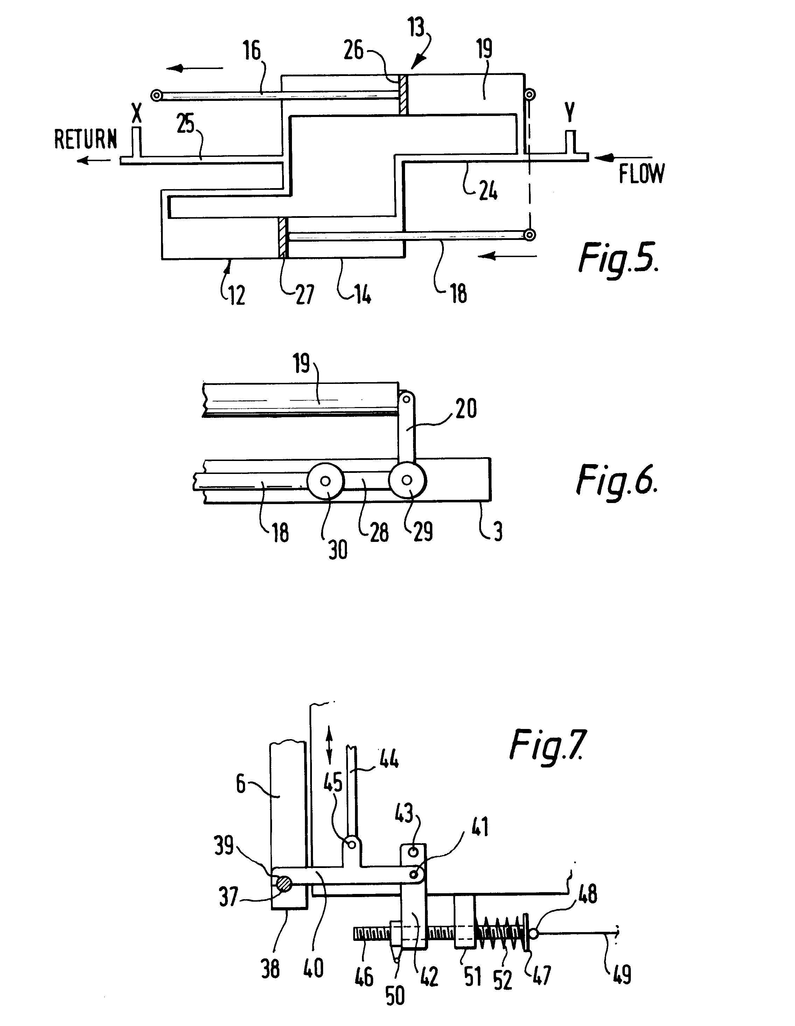

The trailer 1 that is shown in Figures 1 to 3 comprises a chassis on which there is mounted a body 2, which is somewhat deeper towards the front of the trailer 1 than towards the rear. The chassis of the trailer 1 includes a hollow drawbar 3, which extends under the body 2. A transverse beam 4 is disposed on the underside of the chassis, towards the rear of the trailer, and an axle unit 75 (Figure 4) is removably secured thereto.

Disposed within the body 2 is a pusher blade 5, which is moveable between the front and rear ends of the trailer body. At the rear of the body 2 there is mounted a tailgate 6, which is pivotally mounted at 7 on the body 2, and is controlled by a hydraulic ram 8. A lower end of the ram 8 is secured to a latch 9, which is pivotally secured to the body at 10, and co-operates with a lip 11 at a lower edge of the tailgate 6.

Mounted within the drawbar 3, below the body 2 is the first hydraulic ram 12 of a pair 12, 13. The second 13 of the pair of hydraulic rams is mounted above the drawbar 3, for movement fore and aft, along the base of the body 2. As seen in Figures 1 and 2, the left-hand end of the cylinder 14 of the first hydraulic ram 12 is secured at 15 to drawbar 3. The left-hand end of the rod 16 of the second cylinder 13 is secured at 17 to the blade 5.

At their right hand ends (as seen in Figures 1 and 2), the rod 18 of the first hydraulic ram 12 and the cylinder 19 of the second hydraulic ram 13 are interconnected by a rigid link 20, which projects through a slot formed in the upper face of the drawbar 3. The right hand end of the drawbar 3 (as seen) is of an open configuration, but is closed by a boot 21 which is formed with a towing eye 22. The boot 21 is secured to the forward end of the tow bar 3 by means of a pin 23. The first ram cylinder 14 and the second ram rod 16 are connected at the points 15 and 17, respectively to the drawbar 3 and to the blade 5, by means of respective pins.

In Figure 1, the first hydraulic ram 12 is shown in a fully extended position, whilst the second ram 13 is shown in a fully retracted position. The pusher blade 5 is then at the forward end of the body 2. The ram 8 is in a fully extended position. Upon supplying hydraulic fluid in an appropriate manner to the various rams, the second ram 13 begins to extend, the first ram 12 begins to contract, and the tailgate ram 8 also begins to contract. Thus, the pusher blade is caused to be urged towards the rear of the trailer body 2, whilst the tailgate 6 is opened, under the action of the tailgate ram 8.

As the pusher blade 5 travels towards the rear of the trailer body 2, it causes any load therein to be discharged out of the rear end of the trailer. The pusher blade 5 continues its travel towards the rear of the trailer, until it passes the position illustrated in Figure 2, and the bottom edge of the blade 5 is in the region of the open rear end of the trailer 1. At this point, substantially all of the load in the trailer 1 will have been discharged.

It will be appreciated that, in this way, the trailer 1 may be unloaded in a very simple and reliable manner. It is to be appreciated that the upper portion of the tailgate 6, as seen in Figure 1, is open, so that when the tailgate 6 is raised as shown in Figure 2, it does not obstruct the discharge of load from the trailer body 2.

The pusher blade 5 is so angled as to facilitate discharge of a load from the trailer body 2. Although this inclination of the pusher blade 5 takes space from the front end of the trailer (as seen in Figure 1), it will be appreciated that the tailgate 6 is correspondingly shaped as to define an extra load receiving space therein, which compensates for the loss of load area at the front of the trailer.

The configuration and arrangement of the pair of hydraulic rams 12, 13 is particularly convenient. Both of the rams 12, 13 are double acting such that, upon applying hydraulic fluid to them in an opposite sense to that described above, the first ram 12 will extend and the second ram 13 will contract, until the position illustrated in Figure 1 is resumed, with the pusher blade 5 again at the front of the trailer body 2. During this operation, the flow of hydraulic fluid to the tailgate ram 8 is also reversed, and as the tailgate ram 8 is likewise double acting, it causes the tailgate 6 to close, and become latched, as illustrated in Figure 1.

A relatively long travel of the pusher blade 5 may be obtained, in relation to the travel of each of the rams 12, 13 individually. For example, if the rams 12, 13 each have a travel of 3.3 metres, then their combined effort is capable of moving the pusher blade 6.6 metres backwards and forwards along the trailer body 2.

A particularly convenient feature of the illustrated arrangement is that the hydraulic system 12, 13 may readily be removed from the trailer 1, for replacement or maintenance, simply by removing the three pins at 23, 15 and 17, removing the boot 21 from the forward end of the drawbar 3, and withdrawing the assembly 12, 20 and 13 from the trailer 1. If desired, an extension piece may be fitted to the front end of the drawbar 3 - for example, to provide more space for large p.t.o. fittings at the rear of the tractor.

The two rams 12, 13 are interconnected hydraulically, as illustrated in Figure 5. In that figure, the ram rods 16, 18 are shown in mid travel, the first contracting and the second expanding, corresponding to a movement of the pusher blade 5 towards the rear of the trailer body 2.

Thus, in Figure 5, hydraulic fluid is supplied by a flow pipe 24 to the right hand side of each of the ram cylinders 14 and 19, whilst hydraulic fluid is returned via a return line 25 from the left hand side of each cylinder 14, 19. The two points X and Y are connected to corresponding points on the tailgate cylinder 8, as illustrated in Figure 1.

Figure 5 is a theoretical diagram, and in practice, it is unlikely that the two rams 12, 13 will ever occupy the illustrated positions. This is because, as hydraulic fluid is supplied through the flow line 24, the rod 16 of the second ram 13 experiences a greater force, due to the greater working cross-sectional area of the respective ram plunger 26. Thus, whilst the ram 13 is extending, the first ram 12 tends to remain stationary. Accordingly, oil expelled from the left hand side of the second ram cylinder 19 is returned to the hydraulic pump, and since the amount of oil returned from the left hand side of the second ram cylinder 19 is inevitably less than that required to fill the right hand side of the cylinder, the hydraulic pump has a requirement for an increasing amount of hydraulic oil. This requirement comes to a maximum when both of the ram rods 16, 18 are fully extended. Then, as the hydraulic pump continues to supply hydraulic fluid through the flow line 24, the first ram 12 begins to contract, and hydraulic fluid from the left hand side of the first ram cylinder 14 is returned to the hydraulic pump. Since the left hand side of the first ram cylinder 14 returns more hydraulic fluid than is required to fill the right hand side of the cylinder, the hydraulic system has an excess of hydraulic fluid to return to tank, and the fluid requirement continues to decrease, until the first hydraulic ram 12 is fully contracted, and the pusher blade 5 is in its left most position, as seen in Figures 1 and 2.

Upon reversing the hydraulic flow, hydraulic fluid is supplied through the pipe 25 and returned from the pipe 24. The first hydraulic ram is the first to respond, since the working cross-sectional area of its rod plunger 27 is the greater, and the reverse of the above procedure is carried out.

A particularly advantageous feature of the illustrated hydraulic system is that only a very small amount of hydraulic fluid is required. For example, if the two rams 12, 13 are 3.3 metre double acting rams, as mentioned above, then only about 3 litres of hydraulic fluid may be required, to discharge a full load from a trailer body 2 which has a capacity of 12 tones. This is to be compared with a conventional tipping trailer, which may require at least 45 litres of hydraulic oil, to tip a load of similar size.

Figure 6 shows a detail of the linkage 20 between the first cylinder ram rod 18 and the second ram cylinder 19. Within the drawbar 3 there is mounted a bogie arrangement comprising a solid link 28 extending between a first pair of rollers 29 and a second pair of rollers 30. The first ram rod 18 is connected to the rear end of the link 28, whilst the upstanding link 20 is connected to the forward end of the link 28. The rollers 29 and 30 provide a relatively low friction rolling support for the linkage within the drawbar 3, and stabilize the effects of any torque created by the pulling action between the first and second rams 12, 13.

As mentioned above, and as shown in more detail in Figure 4, the axle 75 for the trailer 1 is detachably mounted on the transverse beam 4. To this end, the axle 75 is provided with a pair of securing lugs 31, each formed with a respective bore 32. The transverse beam 4 is of box section, and on its lower face is formed with a pair of apertures 33, through each of which a respective one of the fixing lugs 31 may pass. Apertures 34 in the side walls of the transverse beam 4 register with the bores 32 in the fixing lugs 31. Securing pins 35 pass through the apertures 34 and through the bores 32, to secure the axle 75 firmly within the transverse beam 4. The pins 35 are secured in position by spring clips which pass through holes 36 in the ends of the pins 35, or by any other suitable means.

Thus, the axle 75 may readily be removed from the chassis of the trailer 1, simply by removing the securing pins 35. In this way, the trailer 1 may be fitted with various different axle/wheel arrangements, as different circumstances may require. Thus, for example, the trailer 1 may be fitted with a tandem axle, over size tyres, different braking systems, etc.

It is to be appreciated that the tailgate 6 is actuated by a pair of hydraulic rams 8, each located at a respective side of the body 2. Conveniently, the body 2 may be formed of box section steel, with sheet steel sides disposed on the inward faces of the box sections. Thus, the exterior of the trailer body has a plurality of recesses, each defined between an adjacent pair of box section uprights. The tailgate rams 8 are conveniently placed within such recesses, such that they may be protected. There is preferably provided a manually operated valve to isolate the tailgate rams 8 from the remainder of the hydraulic system. Upon actuating such a valve, the tailgate 6 may be retained in any desired position.

Figure 7 shows details of a tailgate latch which is somewhat different from that shown in Figures 1 and 2. In Figure 7, the tailgate 6 is formed with a pair of outwardly extending studs 37, adjacent its lower edge 38. In Figure 7, only one of the studs 37 is visible, in end view, but it is to be understood that a similar stud, and corresponding associated parts, are provided at the opposite side of the trailer 1.

The stud 37 engages within a corresponding notch 39 formed at one end of a latching member 40, which is pivotally mounted at 41 upon a swinging link 42, which in turn is pivotally mounted at 43 upon the trailer body. The rod 44 of the respective tailgate ram is pivotally connected to the latching member 40 at 45. It is to be understood that, in the Figure 7 embodiment, the respective tailgate rams operate in an opposite sense to that previously described. That is, they contract to release the latch, and extend to secure the latch.

The swinging link 42 is formed with an aperture through which there passes a threaded rod 46, to one end of which there is secured a pressure plate 47 and an eye 48. A control rod 49 extends between the eye 48 and a control valve (not shown). A finger wheel 50 threadedly engages the rod 46 and, in use, abuts against a side of the swinging link 42. The threaded rod 46 passes also through an aperture formed in a support member 51. A compression spring 52 is constrained between a side face of the support member 51 and a side face of the pressure plate 47.

It will be appreciated that, upon turning the finger wheel 50 clockwise, the compression spring 52 is compressed more strongly between the support member 51 and the pressure plate 47, and this in turn exerts an increased force to the right (as seen in Figure 7), via the finger wheel 50, which acts on the left hand side (as seen) of the swinging link 42. Thus, with the parts in the condition illustrated in Figure 7, the spring force exerted by the compression spring 52 is transmitted to the stud 37, to urge the tailgate 6 closed with a predetermined but adjustable force.

In normal use, the ram rod 44 moves up and down under the influence of the hydraulic control circuit, to open and close the latch, and to cause the tailgate 6 to be pivoted open and closed, in much the same way as for the embodiment described with reference to Figures 1 and 2.

However, once the tailgate 6 is latched shut, it will remain fully closed for so long as any force exerted outwardly on the tailgate 6 remains below the spring load determined by the compression spring 52. When this predetermined spring load is exceeded, the tailgate 6 will be permitted to move outwardly somewhat, causing clockwise pivoting of the swinging link 42, and movement of the pressure plate 47 and control rod 49 to the left (as seen in Figure 7). Such movement of the control rod 49 causes actuation of the associated control valve (not shown), which in turn controls operation of the hydraulic rams 12, 13. Thus, when the latch circuit shown in Figure 7 detects an excessive outward force on the tailgate 6, the associated control valve may be operative to prevent any further movement of the pusher blade 5 towards the rear of the body 2, thereby avoiding excessive forces on the tailgate 6. In an especially advantageous arrangement, the associated control valve controls the hydraulic circuit of the rams 12, 13 in an automatic manner, by way of a servo-control loop, such that movement of the pusher blade 5 towards the tailgate 6 is permitted only for so long as the outward force on the tailgate 6 remains below a predetermined value. For example, a limit value of 0.5 tones may be chosen, for the maximum load on the tailgate.

It will be appreciated that, if the tailgate 6 is kept closed, the pusher blade 5 may be moved towards it to cause compaction of any load within the trailer body 2.

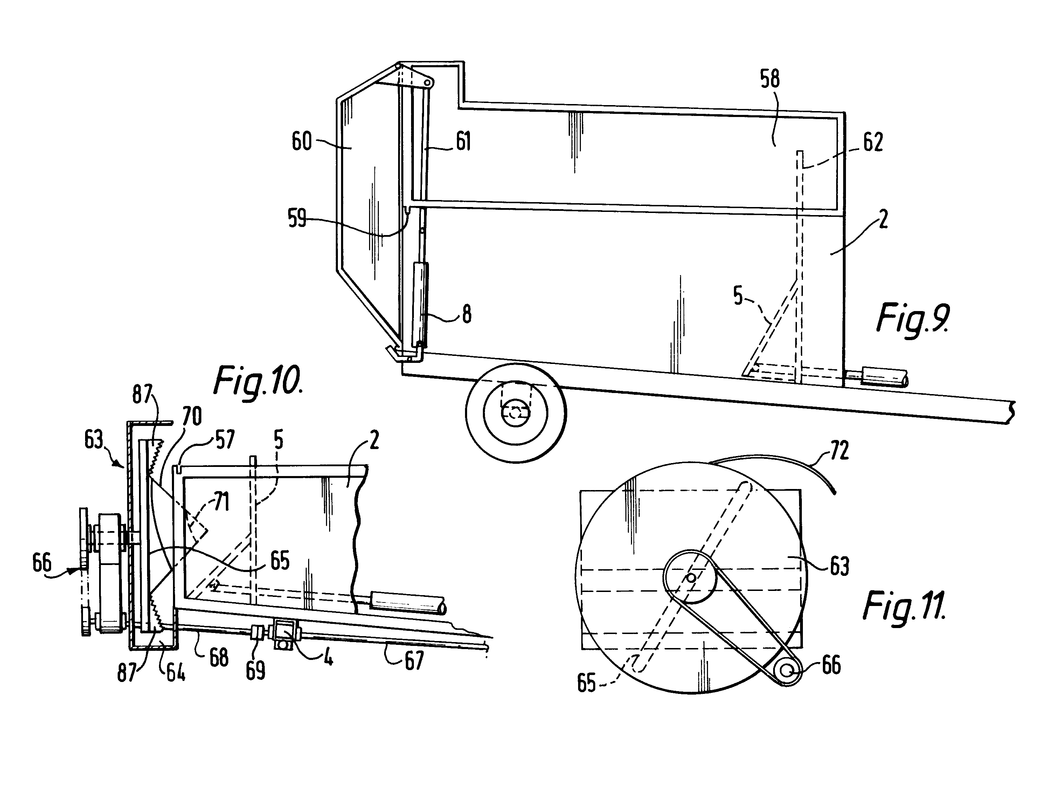

Figure 8 illustrates another useful optional feature of the trailer 1 of Figure 1. In Figure 8, the lower end of the pusher blade 5 is formed as a drawbar having a connecting eye 53 which, in Figure 8, is linked to a pallet 54, which is being unloaded onto a staging 55. The pallet 54 carrier a plurality of large hay bales 56, and as the pusher blade 5 moves to the rear of the trailer body 2, the pallet 54 is conveniently loaded onto the staging 55, complete with its load of hay bales 56. Conversely, upon reverse actuation of the hydraulic rams 12, 13, the pusher blade 5 may be used to draw a pallet such as 54 into the trailer body 2.

In Figure 8, the tailgate 6 has been removed, and there is shown one of a pair of notches 57 provided at each side of the trailer body 2, each to receive a respective pivot for the tailgate 6. Thus, the tailgate 6 may be simply dropped on to the rear end of the trailer body 2, such that its pivots engage within the notches 57, and connected to the tailgate rams 8 by suitable pins.

As a refinement of the arrangement illustrated in Figure 8, the pusher blade 5 may be provided with a fork lift mechanism, for the lifting and loading of pallets.

Figure 9 illustrates how the trailer body 2 may readily be extended upwardly by a silage extension 58, which engages the front portion of the trailer body 2, and is provided at its rear with lugs 59 which engage within the notches 57 in the sides of the trailer body 2. The silage extension 58 has its own enlarged tailgate 60, which is operatively connected to the tailgate rams 8 by means of respective extension rods 61, which are linked to the main rods of the tailgate rams 8 by suitable pin arrangements. The pusher blade 5 is also extended upwardly by means of an extension piece 62, which drops onto the top of the pusher blade 5, and may be secured thereto by means of suitable pins.

It may conveniently be mentioned here that the wedge shape of the trailer body 2, which affords a greater depth at the front of the trailer than at the rear, helps to achieve a low centre of gravity of the trailer body 2 when filled, and also serves to accommodate various sizes of axle arrangements.

Figures 10 to 12 illustrate a particularly advantageous arrangement. Here, again, the conventional tailgate 6 has been removed, and replaced by a spreading mechanism 63.

The spreading mechanism 63 has a housing 64 which is provided with hooks (not shown) which engage in the notches 57 at the rear of the trailer body 2. The lower portion of the housing 64 snap engages with the latch mechanism of the trailer 1, thereby to hold the spreading mechanism 63 securely in position at the rear of the trailer body 2.

The rotor 65 comprises a plurality of rotating arms. With advantage, the radially outer one third of each of the rotating arms may be in the form of a pivotally mounted flail, so as to reduce the necessary starting torque for the spreading mechanism 63. At the centre of the rotor 65 there is provided a cone 70, which may be formed with a thread 71, which acts as an auger, in such a manner as to pull out any centre core of material being pushed towards the rotor 65, and disperse it radially outwardly.

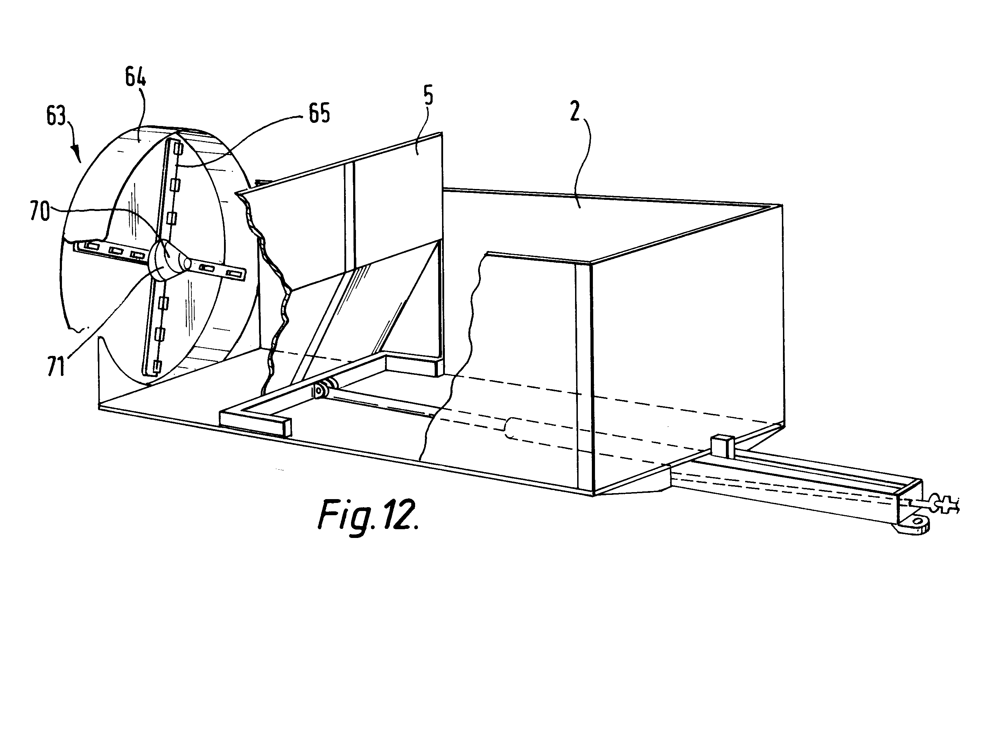

Two somewhat different versions of the rotor 63 are shown in Figures 10 and 12. In Figure 10, the cone 70 is of greater diameter, and the rotor 63 carries toothed blades 87 at its periphery.

The auger provided by the helical thread 71 need not be conical in configuration, and/or it may be provided with serrations along the helical thread. It may be made substantially bigger than as illustrated in Figure 12 - for example having a maximum diameter equal to about a third of the overall diameter of the rotor 65. It may project further forward, than is illustrated in Figure 12. It may be provided with a plurality of radiating arms which are of different lengths and extend at different angles to the axis of the auger, in order to break up the material being fed to the rotor 65. Such arms may be mutually spaced axially of the auger. The auger may be provided with means for driving it in rotation at a different speed and/or in a different direction, to the rest of the rotor 65.

In use, the rotor 65 is caused to spin at relatively high speed (e.g. a peripheral speed of about 600 metres per minute), being driven by the p.t.o.

shaft 67, and material within the trailer body 2 is urged towards the rotor 65, by means of the pusher blade 5. The rotating arms 65 dispense the material radially of the trailer - for example, to dispense forage for the feeding of stock, or to spread manure. For example, the housing 64 may incorporate a flap 72, as shown in Figure 11, to direct material dispensed by the spreading mechanism 63. A flap such as 72 may be provided at each of the two sides of the trailer body 2, and the drive 66 may be provided with a reversing mechanism, so that material may optionally be dispensed at either side of the trailer 1.

A particularly useful feature of the illustrated arrangement is that, where a latch mechanism of the type shown in Figure 7 is employed in combination with the spreading mechanism 63, the pressure sensing mechanism may act as previously described, to limit excess forces on the rotor, and to act as an automatic feed mechanism (under servo control), so as to feed material to the rotating arms 65, under approximately constant pressure (or, at least, below a predetermined limit pressure).

Another useful feature of the illustrated arrangement is that the housing 64 of the spreading mechanism 63 extends below the floor of the trailer body 2, so that the body may be totally emptied, in use.

As a useful modification, the pusher blade 5 may be fitted at its top with a horizontal plate which extends towards the spreader mechanism 63, to protect against any residual debris (e.g. bricks or stones) being flung out of the rear end of the trailer body 2, as it approaches the empty condition. Conveniently, such a horizontal plate may be provided as a removeable item, and may serve the dual purpose of the extension 62 for the silage adaptation shown in Figure 9.

It will be appreciated that, if necessary, the spreader mechanism 63 may be "opened" away from the trailer body 2, by releasing the latch mechanism which engages the lower portion of the spreader housing 64, thereby allowing the housing 64 to pivot about the notches 57, in the manner of a tailgate. Thus, the spreader mechanism 63 may be opened as a rear door, to allow access to the trailer body, without total removal of the spreader mechanism 63.

As an alternative to the illustrated latch mechanisms, the tailgate 6 (and equivalent replacements) may be provided with a more conventional latch mechanism, of the type provided on lorries, where a rod extends transversely of the lower edge of the trailer body 2, and is provided with tabs which engage the tailgate to hold it in a closed position, upon rotating the transverse rod by means of a lever provided at one end thereof. Any force within the trailer body that tends to open the tailgate will be transmitted as a moment to the operating lever of the locking rod. By measuring that moment, there may be deduced a measurement of the force exerted by the load, against the tailgate 6 (or equivalent).

Thus, it will be appreciated that the illustrated embodiments described above may provide a very versatile trailer which is capable of a variety of different functions, yet is of simple and reliable construction, and may be used to discharge loads in a particularly efficient and safe manner, even on hilly terrain, and utilising a relatively small tractor. Moreover, the illustrated trailer 1 may be particularly useful for discharging loads in low buildings, where tipping would be physically impossible.

As mentioned above, only a small amount of hydraulic fluid is needed, which should substantially avoid problems of "oil starvation", which is commonly found even on bigger tractors, when tipping large trailers.

It will be appreciated from the foregoing description that, when the pusher blade 5 is in the discharge position, the amount of oil consumed by the hydraulic system is substantially the same as when the pusher blade 5 is in the retracted position.

The ready interchangeability of axles is considered to be of great practical use.

Another useful feature is the removeable spreading mechanism, to provide a relatively cheap and simple forage feeding and/or muck spreading apparatus.

Moreover, the illustrated trailer 1 readily provides load compaction, which may be especially useful, when used with the silage extension.

In the embodiments that are illustrated and described above, there are provided two hydraulic rams 12 and 13 mounted one above the other, with the lower ram 12 mounted within the drawbar 3. As an alternative to this, there may be provided three hydraulic rams mounted side-by-side, on top of the drawbar. For example, there may be provided a pair of 75 cm outer rams whose rods are arranged to extend rearwardly through the trailer body 2, acting on the pusher blade 5. A central 100 cm ram is disposed between the two outer rams, and has a rod which is connected to the cylinders of the outer rams, and is arranged to extend forwardly of the trailer 1, above the drawbar 3. The rear end of the cylinder of the central ram is secured to the trailer 1. Such an arrangement may be cheaper than using two 150 cm rams, one of which is mounted in the drawbar 3, as illustrated for example in Figure 1.

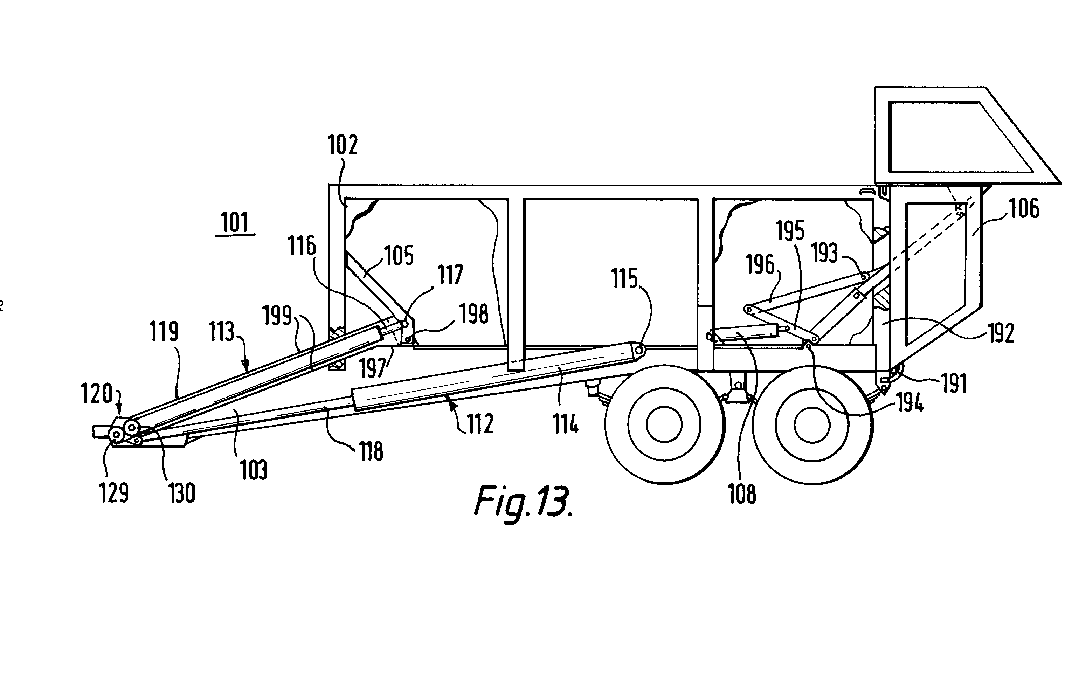

Another variant of the trailers shown in Figures 1 to 12 is illustrated in Figure 13.

In Figure 13, first and second hydraulic rams 112 and 113 are mounted within an enlarged hollow drawbar 103 which is provided at the forward end of the body 102 of a trailer 101.

The rear end of the first ram cylinder 114 is secured at 115 to the chassis of the trailer 101. The rod 118 of the first ram 112 is pivotally secured to a bogie 120 having first and second pairs of rollers 129 and 130, which are constrained to run between upper and lower rails 199 which are provided by an inclined channel member at the front edge of the drawbar 103, which channel member extends substantially parallel to the second ram 113, as seen in Figure 13.

The upper end of the rod 116 of the second ram 113 is pivotally secured at 117 to a pusher blade 105 which is disposed within the trailer body 102. The pusher blade 105 is in turn pivotally mounted at 198 on support and guide means (not shown), which support and guide the pusher blade 105, as it travels fore and aft within the trailer body 102.

The above described arrangement of hydraulic rams 112, 113 operates in a similar manner to that described above with reference to Figures 1 to 12.

Thus, hydraulic oil is firstly supplied to the first ram 112 to cause the rod 118 to retract within the cylinder 114. This causes the bogie 120 to travel up the guide rails 199, thereby causing the second ram 113 to move bodily upwardly and rearwardly, with respect to the trailer body 102. In turn, this causes the pusher blade 105 to move rearwardly through the trailer body 102, to push the load towards the rear of the trailer 101, much as before. It will be noted that a suitable recess 197 has to be provided in the bottom floor of the trailer body 102, to accommodate travel of the second ram 113.

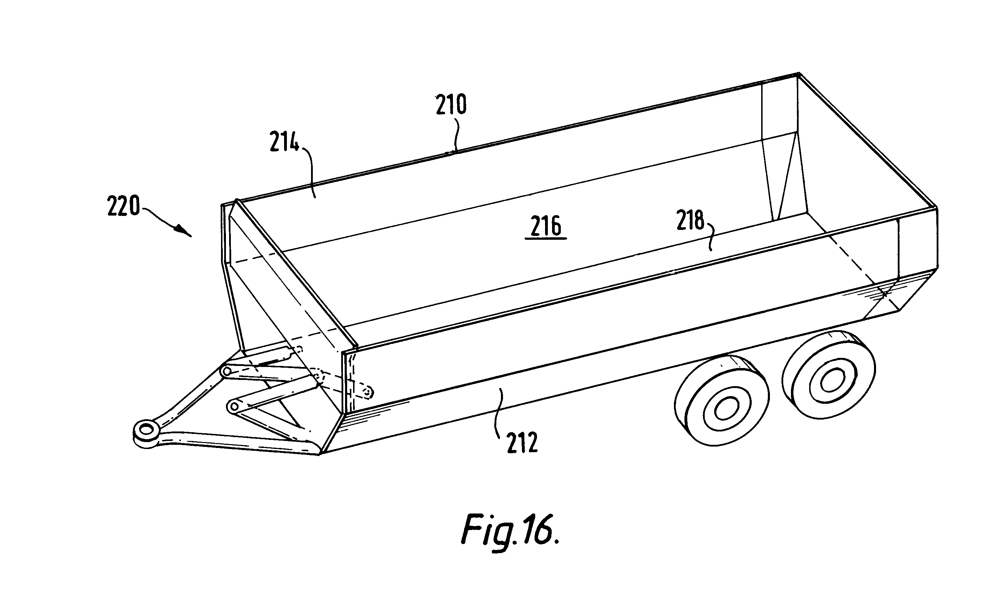

When the first ram 112 is fully retracted, oil is supplied to the cylinder 119 of the second ram 113, to cause the rod 116 to extend, and continue driving the pusher blade 105 towards the rear of the trailer body 102. When sufficient resistance is encountered by the support and guide means (not shown) for the pusher blade 105, it will be appreciated that the extending action of the second ram rod 116 causes the pusher blade 105 to pivot about the point 198, and thereby propel the load further towards the rear of the trailer 101. This pivoting action of the pusher blade 105 may occur when the support and guide means therefor reaches a limit of its travel, or encounters sufficient resistance from the load within the trailer body 102. Additional explanation of a similar arrangement is given below, with reference to Figures 16 to 21.

Preferably, a sequencing valve is provided, to cause the second ram 113 to operate after the first ram 112 has operated, in the above described manner, and at a slower speed than the first ram 112. This is because, as the pusher blade 105 is pushed towards the rear of the trailer body 102, the load tends to become more compacted. Thus, when discharging manure or forage (for example, with a spreader 63 as illustrated in Figures 10 to 12), one may obtain a more uniform discharge rate, by slowing down the rate of travel of the pusher blade 105, as it approaches the rear of the trailer 101. This may be done in a simple two-stage operation, as suggested above, by causing the second ram 113 to operate more slowly than and after the first ram 112. Alternatively, more sophisticated control arrangements may be provided, to cause the pusher blade 105 to travel at any desired speed, which may be varied progressively as required.

Preferably, the hydraulic supply and control circuit is such that the pusher blade 105 is returned to the front of the trailer body 102 as quickly as possible. For example, if a sequencing valve as described above is provided, then this may be bypassed during the return strokes of the rams 112 and 113.

It will be appreciated that, when the ram 113 is contracted and/or the ram 112 is extended, the first force that is applied to the pusher blade 105 will cause it to pivot about the point 198, to resume its initial position as illustrated in Figure 13.

Instead of the bogie 120, there may be provided an alternative guide means, for guiding the movement of the ram 113 within the drawbar.

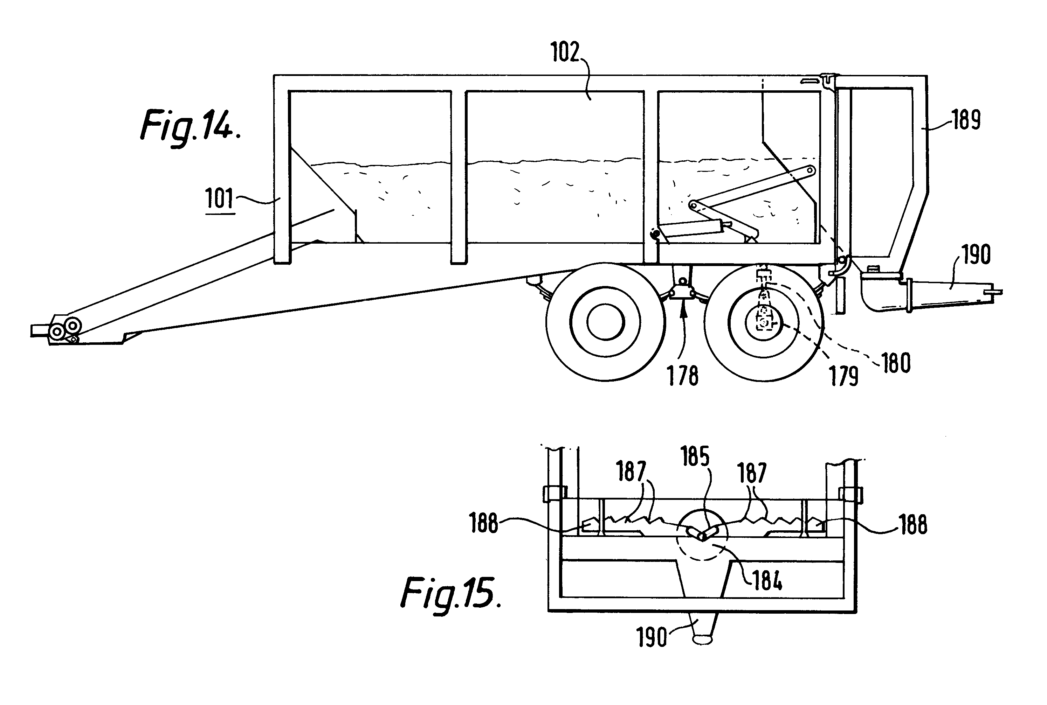

It will be appreciated that, although Figure 14 is partly in section, the drawbar 103 is substantially enclosed by suitable side walls.

The tailgate 106 of the trailer 101 is of a similar configuration to that illustrated in Figures 1 and 2. However, it will be seen that, in Figure 13, the actuating mechanism for the tailgate 106 is somewhat different.

At each side of the trailer body 102, located within the body framework, is a respective tailgate ram 108, which acts on a toggle linkage 195, 196, which is pivotally connected at 194 to the trailer chassis, and at 193 to the tailgate 106. As the ram 108 is actuated, the toggle linkage 195, 196 either extends or retracts, to open and close the tailgate 106. The link 196 of the toggle linkage passes through a slot formed in a respective upright 192 of the trailer body 102. This helps to protect the link 196 from damage.

Shown diagrammatically in Figure 13 is a latch mechanism 191 for the tailgate 106. This mechanism is of a substantially conventional type, such as is used to secure the tailgate of lorries (as mentioned above).

As mentioned above, the tailgate ram 108 may be arranged to be actuated automatically, when the ram 112 and/or the ram 113 is actuated, so as to open the tailgate 106.

Although the illustrated tailgate 106 is pivotable about a horizontal axis located at the upper part of the trailer body 102, there may be provided alternative arrangements, having a tailgate which pivots about a verticle axis.

In the modification illustrated in Figures 14 and 15, the trailer 101 operates much as before, but is adapted to contain and feed particulate material such as fertilizer, through an oscillating discharge nozzle or "waggler" 190, which is carried on a specially adapted tailgate 189.

Situated in front of the waggler 190 and at the bottom part of the tailgate 189, below the level of the floor of the trailer body 102, is a mechanism which is illustrated in Figure 15, and comprises two elongate members 188 having forwardly extending projections 187 and driven by a reciprocating mechanism 185.

Both the oscillating mechanism 185 and the waggler 190 are caused to oscillate from side-to-side, by way of a drive taken from the p.t.o. shaft of the tractor, and cause both the elongate members 188 (which may be made of wood) and the waggler 190 to move from side-to-side. The reciprocating members 188 cause the fertilizer to be drawn into a feed duct 184 for the waggler 190, to ensure that it is continuously supplied with fertilizer.

Shown very diagrammatically in Figure 14 is an additional hydraulic ram 180, which acts on a rear axle 179, of a tandem axial arrangement 178. When the load within the trailer body 102 is pushed rearwardly, the ram 180 is caused to extend, to push the rear axle downwardly 179. Thus, the weight of the trailer 101 is transferred to the ground via the rear wheels of the tandem pair, rather than the front wheels. This causes more weight to be placed on the tractor wheels, thereby making the arrangement more stable, as the trailer 101 is progressively emptied.

The ram 180 may be arranged to be supplied automatically with fluid to cause it to extend, as soon as the second ram 113 which drives the pusher blade 105 begins to extend. If the hydraulic supply to the ram 180 is linked to that of the ram 113, then the tandem rear axle arrangement 178 may be made automatically self-compensating, in that the hydraulic fluid pressure supplied to the ram 180 increases and reduces automatically, as that supplied to the main ram 113 increases and reduces, with increasing and reducing load weight.

Thus, it will be appreciated that the trailer 101 may readily be modified to dispense fertilizer, in a much cheaper manner than conventional fertilizer spreaders, which employ a special hopper body having a longitudinal auger which extends the full length of the body. Such an item of dedicated apparatus is relatively expensive.

Referring now to Figures 16 to 21 of the drawings, although an arrangement therein of hydraulic rams is not in accordance with the invention as claimed, other useful features for use in a trailer are nevertheless disclosed, which features may be selectively employed with the preceding embodiments of the invention. In Figures 16 to 21, a trailer vehicle such as an agricultural trailer comprises a load-carrying body 210 which is mounted on a chassis 212. The body 210 comprises spaced-apart side walls 214 with inwardly sloping lower sections 216 extending upwardly from each side of a base 218.

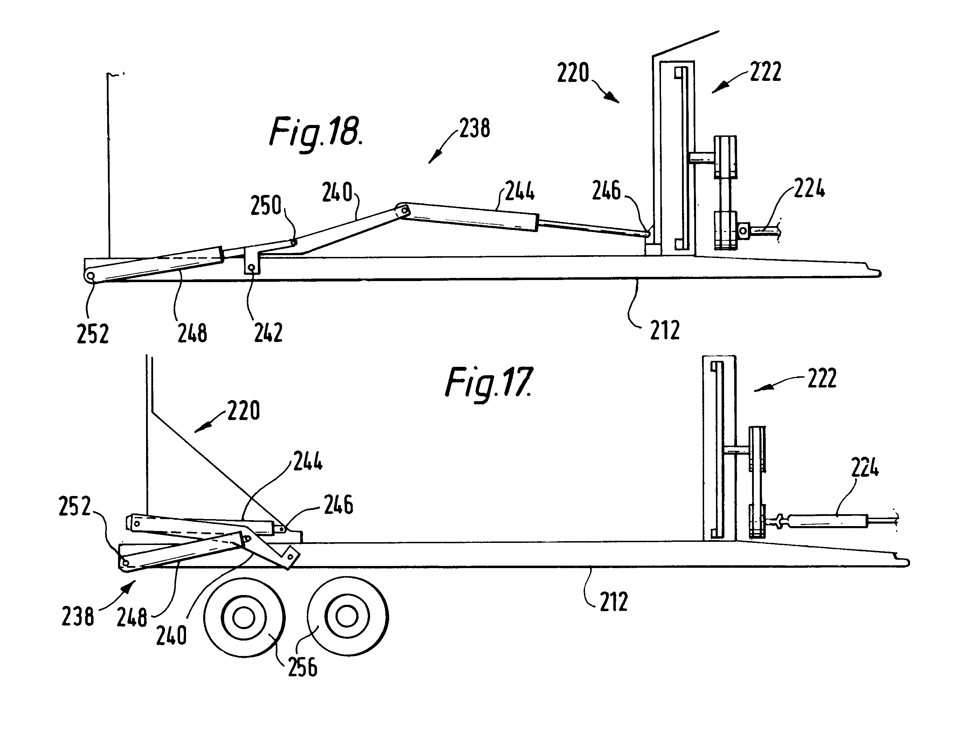

The body 210 has a discharge blade or wall indicated generally at 220 mounted therein which is slideable longitudinally of the body 210 to discharge a load in the trailer from one end thereof. In the case of the trailer shown in Figure 16 of the drawings, the load is discharged from the rear of the body 210, whereas the load is discharged from the front of the body 210 in the trailer shown in Figure 17 of the drawings.

The discharge end of the body 210 can be provided with a spreader or feeder mechanism indicated generally at 222. Such a feeder or spreader mechanism 222 is particularly suitable where the trailer is to be used for agricultural purposes and the spreader or feeder mechanism 222 is driven by a cardan shaft 224 connected to an agricultural tractor's power take off shaft (not shown). Alternatively, the discharge end of the body 210 can be provided with a pivotally openable tailgate (not shown).

The discharge blade or wall 220 comprises a lower section 226 extending transversely of the body 210 between box assemblies 228 located at each side of the body. Each box assembly 228 is provided with trunnions or rollers (not shown) which are slideably rotatably mounted in channels or guides (not shown) extending longitudinally of the body 210.

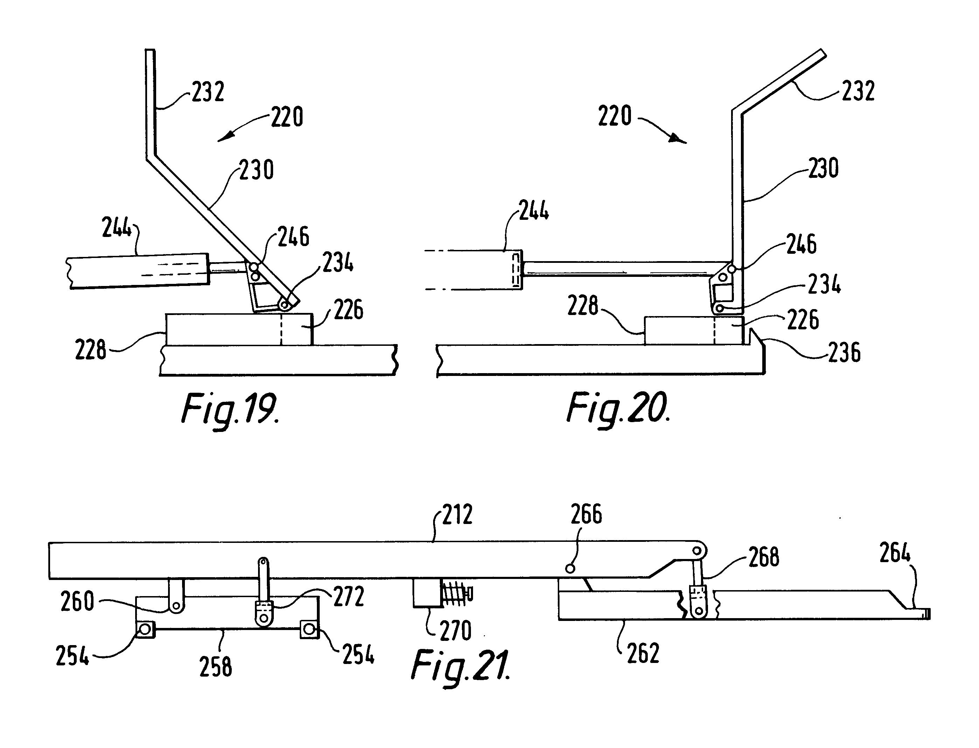

An upper section 230 of the blade or wall 220 which has an inwardly cranked upper end 232 is pivotally connected to the lower section 226 for pivotal movement about a transversely extending pivotal axis 234 from the inclined position shown in Figure 19 of the drawings to the upright position shown in Figure 20 of the drawings when the box assemblies 228 and/or the lower section 226 contact a stop 236 at the discharge end of the body 210. The movement of the blade or wall 220 to this upright position facilitates the complete discharge of all of the load in the body 210 even when part of the load has been compacted by the action of the spreader or feeder mechanism 222 onto the surface of the blade or wall 220.

An operating mechanism indicated generally at 238 for effecting longitudinal sliding movement of the blade or wall 220 along the length of the body 210 comprises a lever 240 pivotally connected at one end to a fixed point 242 on the chassis 212. One end of a double-acting piston-and-cylinder assembly 244 is pivotally connected to the other end of the lever 240 and the opposite end of the assembly 244 is pivotally connected at a point 246 to the section 230 of the blade or wall 220. The point 246 is spaced-apart above the pivotal axis 234 of the section 230 of the blade or wall 220 so that at the end of the discharge stroke of the blade or wall 220, the section 230 thereof is moved by the action of the operating mechanism 238 from the inclined to the upright position.

A double-acting piston-and-cylinder assembly 248 is pivotally connected at one end to a point 250 between the ends of the lever 240 and is pivotally connected at its other end to a fixed point 252 on the chassis 212. The fixed point 252 is spaced-apart from the fixed point 242 to which said one end of the lever 240 is connected to the chassis 212 in a direction away from the discharge end of the body 210.

The lower and/or side edges of the lower section 226 and the upper section 230 of the discharge blade or wall 220 are provided with flexible seals (not shown) which engage in sealing contact with the base 218 and side walls 214 of the body 210 during sliding movement of the blade or wall 220 therealong to facilitate complete discharge of the load from the body 210.

The chassis 212 is provided with tandem axles 254 extending transversely of the chassis 212 on which pairs of wheels 256 are mounted. The axles 254 are connected to a leading link assembly 258 so that one axle 254 is disposed at the rear and one at the front of the assembly 258. The leading link assembly 258 is pivotally connected between its ends to the chassis 212 for pivotal movement about an axis 260 extending transversely of the chassis 212. A drawbar 262, provided with a hitch 264 at its front end, is pivotally connected at its rear end to the chassis 212 for limited pivotal movement about a transversely extending axis 266. A drawbar downforce sensing mechanism 268 is connected between the drawbar 262 and the chassis 212 and may be in the form of a piston-and-cylinder mechanism. The sensing mechanism 268 is connected to a servo-pump assembly 270 which actuates a load transfer slave unit 272 connected between the chassis 212 and the portion of the leading link assembly 258 in front of the axis 260 to urge the front axle 254 downwards and transfer load thereto when the drawbar downforce exceeds a predetermined value of say, for example, 150 kg weight. This transfer of load to the front axle 254 decreases the drawbar downforce due to the change in the position of the support relatively to the centre of gravity of the trailer in a direction towards the front thereof. The range of downward movement of the front axle 254 can be increased by positioning the pivotal axis 260 of the leading link assembly 258 towards the rear thereof thus improving the load transfer action.

When the trailer has been loaded with the discharge blade or wall 220 in the position shown in Figure 17 of the drawings, discharge of the load is effected by simultaneous or sequential extension of the piston-and-cylinder assemblies 244 and 248 of the operating mechanism 238 to move the blade or wall 220 from the position shown in Figure 17 of the drawings towards the position shown in Figure 18 of the drawings. Where the trailer is connected to an agricultural tractor, the piston-and-cylinder assemblies 244 and 248 are actuated by hydraulic fluid under pressure supplied from the hydraulic system of the agricultural tractor. Alternatively, the trailer can be provided with an integral supply of hydraulic fluid under pressure in the form of, for example, a hydraulic fluid reservoir and a manually operated pump (not shown).

As the blade or wall 220 is moved by the operating mechanism 238 from the position shown in Figure 17 of the drawings towards the discharge end of the body 210, it will be seen that the piston-and-cylinder assemblies 244 and 248 both extend in a direction which is substantially parallel to the required direction of movement of the blade or wall 220 and are thus capable of exerting optimum force on the blade or wall 220 under the conditions of maximum load thereon. As the blade or wall 220 moves progressively towards the discharge end of the body 212 and the load thereon decreases, the lever 240 is progressively pivoted about is axis 242 to increase the effective length of travel of the operating mechanism 238 until maximum extension is reached when the blade or wall 220 reaches the discharge end of the body 210. At this point, the lower section 226 of the blade or wall contacts the stop 236 and the final portion of the extension of the operating mechanism 238 moves the upper section 230 of the blade or wall 220 from the inclined position shown in Figure 17 to the upright position shown in Figure 18 of the drawings. There is thus a complete discharge of the load from the body 210 even when the load has been compacted onto the surface of the upper section 230 of the blade or wall 220 which is often found to occur due to the action of the spreader or feeder mechanism 222.

It will also be appreciated that the major portion of the operating mechanism 238 is contained in both its contracted and extended position within the plan outline of the body 210 thereby enabling this type of operating mechanism 238 to be utilised on trailers which either discharge the load from the rear end or from the front end thereof thus enabling a standard form of operating mechanism to be utilised on these two variants of trailers.

In a modification, the two conventional axles 254 can be replaced by four stub axles mounted on the leading link assembly 258 and indeed the load transfer facility would operate satisfactorily even when the tandem axle arrangement is replaced by a triple or any other multiple axle arrangement.

In another modification, the cross-sectional area of the first ram 248 is approximately twice the cross-sectional area of the second ram 244, so that during extension of the first ram 248, oil which is discharged therefrom is supplied to the second ram 244, which thus becomes fully extended after approximately half of the travel of the first ram has been completed. The additional oil discharged during the second half of the stroke of the first ram 248 is supplied via a by-pass valve on the supply line to the second ram 244, so that the oil is returned to the sump of the tractor hydraulic system.

## Claims

1. A vehicle comprising a body (2) for receiving a load, a discharge blade (5) slideably mounted in the body (2), and first and second hydraulic ram means (12, 13) arranged to urge the discharge blade (5) from one end of the body (2) to the other, thereby to discharge a load from the body (2), through said other end, the first hydraulic ram (12) having a first part (14) which is connected to a fixed point (15) on the vehicle and the second hydraulic ram (13) having a first part (16) which is connected to the discharge blade (5), characterised in that second parts (18, 19) of the first and second hydraulic rams (12, 13) are connected by support means (20, 28, 29, 30) which is constrained to move along a predetermined path defined by an elongate member (3) with which the support means (20, 28, 29, 30) engages, and at least one of said second parts (18, 19) is pivotally connected to said support means (20, 28, 29, 30), said first and second parts (14, 16, 18, 19) of each ram (12, 13) being respectively one and the other of the rod and cylinder (14, 16, 18, 19) of the respective ram (12, 13).

2. A vehicle according to Claim 1, wherein said support means (20, 28, 29, 30) engages said elongate member (3) adjacent said second parts (18, 19).

3. A vehicle according to Claim 1 or 2, wherein said predetermined path and the path of travel of the discharge blade (5) are non-parallel.

4. A vehicle according to any of Claims 1 to 3, wherein each of said hydraulic rams (12, 13) comprises a double-acting hydraulic ram.

5. A vehicle according to any of Claims 1 to 4, wherein said cylinders (14, 19) are arranged substantially side-by-side.

6. A vehicle according to Claim 4 or 5, wherein the hydraulic rams (12, 13) are arranged to act in opposing senses.

7. A vehicle according to any of Claims 1 to 6, wherein the flow and return sides of the hydraulic rams (12, 13) are so interconnected that, during actuation of each ram, as hydraulic fluid is supplied to one side of the ram, hydraulic fluid is returned from the other side of the ram.

8. A vehicle according to Claims 6 and 7, wherein the hydraulic rams (12, 13) are of similar capacities, such that, during actuation of the rams to urge the discharge blade (5) from one end of said body (2) to the other, the net consumption of hydraulic fluid by the hydraulic rams (12, 13) is substantially zero.

9. A vehicle according to any of Claims 1 to 8, wherein the discharge blade (220) or wall comprises a lower portion (226) slideably mounted in the body for longitudinal sliding movement from one end to the opposite end thereof and an upper portion (230) which is pivotally connected to the lower portion for pivotal movement relative thereto about an axis extending transversely of the vehicle from an inclined to an upright position.

10. A vehicle according to any of the preceding claims, being a trailer (1).

11. A vehicle according to Claim 10, wherein said elongate member (3) comprises at least part of a drawbar assembly (3) of the trailer (1).

12. A vehicle according to Claim 10 or 11, wherein at least one of said hydraulic rams (12, 13) is housed, at least partially, in a drawbar assembly (3) of the trailer (1).

13. A vehicle according to any of the preceding claims, including a gate (6) pivotally mounted at one end of said body (2), and means (8) for opening and closing the gate automatically, in synchronism with sliding movement of said blade (5) through said body (2).

14. A vehicle according to Claim 13, wherein said gate opening and closing means comprises a hydraulic ram (8).

15. A vehicle according to any of the preceding claims, including a dispensing means (63) disposed at one end of said body (2), arranged to dispense material from said body (2), which material is urged towards said dispensing means (63), in use, by said discharge blade (5)

16. A vehicle according to Claim 15, wherein said dispensing means comprises a rotor (65) arranged to dispense forage or like material from said body (2).

17. A vehicle according to Claim 15, wherein said dispensing means comprises an oscillating dispensing nozzle (190) arranged to be gravity fed with and to dispense fertilizer or other particulate material from said body (2).

18. A vehicle according to Claim 15, 16 or 17, wherein said dispensing means (63) is readily detachable from said body (2).

19. A vehicle according to any of the preceding claims, including means for monitoring the magnitude of a force applied to an end wall of the body (2) or a part (6) attached to an end of the body (2), and so controlling a pushing force applied to said discharge blade (5) as to maintain said force applied to said end wall or part (6) below a predetermined value.

20. A vehicle according to any of the preceding claims, including a tandem axle assembly (178) and means for selectively urging either the leading or trailing axle of said tandem axle (178) preferentially towards the ground.

21. A vehicle according to any of the preceding claims, wherein said support means (20, 28, 29, 30) comprises rollers (29, 30) which engage abutment surfaces within said elongate member (3) to guide the support means (20, 28, 29, 30) during its movement along said predetermined path.

**Revendications**

1. Véhicule comprenant une caisse (2) destinée à recevoir une charge, une lame de déchargement (5) montée à coulissement dans la caisse (2) ainsi qu'un premier et un second vérin hydraulique (12, 13) propres à déplacer la lame de déchargement (5) d'une extrémité de la caisse (2) vers l'autre, afin de décharger une charge de la caisse (2), par l'autre extrémité, le premier vérin hydraulique (12) comportant une première partie (14) qui est reliée à un point fixe (15) sur le véhicule et le second vérin hydraulique (13) comportant une première partie (16) qui est reliée à la lame de déchargement (5), caractérisé en ce que les secondes parties (18, 19) du premier et du second vérin hydraulique (12, 13) sont reliées par un moyen de support (20, 28, 29, 30) qui est forcé de se déplacer suivant un trajet prédéterminé défini par un long élément (3) avec lequel le moyen de support (20, 28, 29, 30) est engagé, et au moins une des secondes parties (18, 19) est articulée au moyen de support (20, 20, 29, 30), la première et la seconde partie (14, 16, 18, 19) de chaque vérin (12, 13) étant respectivement soit la tige, soit le cylindre (14, 16, 18, 19) de ce vérin (12, 13).

2. Véhicule suivant la revendication 1, dans lequel le moyen de support (20, 28, 29, 30) est engagé avec le long élément (3) à proximité des secondes parties (18, 19).

3. Véhicule suivant la revendication 1 ou 2, dans lequel le trajet prédéterminé et le trajet de déplacement de la lame de déchargement (5) sont non parallèles.

4. Véhicule suivant l'une quelconque des revendications 1 à 3, dans lequel chacun des vérins hydrauliques (12, 13) est un vérin hydraulique à double effet.

5. Véhicule suivant l'une quelconque des revendications 1 à 4, dans lequel les vérins (14, 19) sont disposés on substance côte à côte.

6. Véhicule suivant la revendication 4 ou 5, dans lequel les vérins hydrauliques (12, 13) agissent on sens opposés.

7. Véhicule suivant l'une quelconque des revendications 1 à 6, dans lequel les côtés d'arrivée et de retour dés vérins hydrauliques (12, 13) sont raccordés l'un à l'autre d'une manière telle que, pendant l'actionnement de chaque vérin, lorsque du fluide hydraulique est admis d'un côté du vérin, du fluide hydraulique soit expulsé en retour depuis l'autre côté du vérin.

8. Véhicule suivant les revendications 6 et 7, dans lequel les vérins hydrauliques (12, 13) sont de capacités semblables, de sorte que, pendant l'actionnement des vérins pour déplacer la lame de déchargement (5) depuis une extrémité de la caisse (2) vers l'autre, la consommation nette de fluide hydraulique par les vérins hydrauliques (12, 13) est en substance nulle.

9. Véhicule suivant l'une quelconque des revendications 1 à 8, dans lequel la lame de déchargement (220) ou la paroi comprend une partie inférieure (226) montée à coulissement dans la caisse en vue de coulisser d'une extrémité de la caisse vers l'extrémité opposée et une partie supérieure (230) qui est articulée à la partie inférieure afin de pivoter par rapport à celle-ci autour d'un axe transversal au véhicule, d'une position inclinée vers une position verticale.

10. Véhicule suivant l'une quelconque des revendications précédentes, constitué par une remorque (1).

11. Véhicule suivant la revendication 10, dans lequel le long élément (3) comprend au moins une partie d'un timon (3) de la remorque (1).

12. Véhicule suivant la revendication 10 ou 11, dans lequel au moins un des vérins hydrauliques (12, 13) est logé, au moins partiellement, dans un timon (3) de la remorque (1).

13. Véhicule suivant l'une quelconque des revendications précédentes, conprenant une ridelle arrière (6) montée à pivot à une extrémité de la caisse (2), et un dispositif (8) pour ouvrir et fermer la ridelle arrière automatiquement, en synchronisme avec le coulissement de la lame (5) à travers la caisse (2).

14. Véhicule suivant la revendication 13, dans lequel le dispositif d'ouverture et de fermeture de la ridelle arrière est un vérin hydraulique (8).

15. Véhicule suivant l'une quelconque des revendications précédentes, comprenant un dispositif distributeur (63) disposé à une extrémité de la caisse (2), propre à distribuer de la matière à partir de la caisse (2), lorsque cette matière est refoulée vers le dispositif distributeur (63), en service, par la lame de déchargement (5).

16. Véhicule suivant la revendication 15, dans lequel le dispositif distributeur comprend un rotor (65) propre à distribuer du fourrage ou une matière analogue à partir de la caisse (2).

17. Véhicule suivant la revendication 15, dans lequel le dispositif distributeur comprend une buse de distribution oscillante (190) propre à être alimenté par gravité au moyen d'engrais et à distribuer cet engrais ou une autre matière particulaire à partir de la caisse (2).

18. Véhicule suivant la revendication 15, 16 ou 17, dans lequel le dispositif distributeur (63) est aisément détachable de la caisse (2).

19. Véhicule suivant l'une quelconque des revendications précédentes, comprenant un moyen pour surveiller la valeur d'une force appliquée à une paroi d'extrémité de la caisse (2) ou à une partie (6) attachée à une extrémité de la caisse (2), et ainsi pour régler une force de refoulement appliquée à la lame de déchargement (5) de manière à maintenir la force appliquée à la paroi d'extrémité ou à la partie (6) en dessous d'une valeur prédéterminée.

20. Véhicule suivant l'une quelconque des revendications précédentes, comprenant deux essieux en tandem (178) et des moyens pour solliciter sélectivement l'essieu avant ou l'essieu arrière de manière préférentielle vers le sol.

21. Véhicule suivant l'une quelconque des revendications précédentes, caractérisé en ce que le moyen de support (20, 28, 29, 30) comprend des galets (29, 30) qui attaquent des surfaces d'appui dans le long élément (3) pour guider le moyen de support (20, 28, 29, 30) pendant son déplacement suivant le trajet prédéterminé.

**Patentansprüche**

1. Fahrzeug mit einer Karosserie (2) zur Aufnahme einer Ladung, einem gleitend in der Karosserie (2) gelagerten Entladeblatt und ersten sowie zweiten hydraulischen Stellzylindereinrichtungen (12, 13), mit denen das Entladeblatt (5) von einem Ende der Karosserie (2) zu deren anderem Ende verfahrbar ist, wodurch eine Ladung von der Karosserie (2) über das andere Ende abgeladen wird, wobei der erste hydraulische Stellzylinder (12) einen ersten Teil (14) hat, der mit einem festen Punkt (15) an dem Fahrzeug verbunden ist, und der zweite hydraulische Stellzylinder (13) einen ersten Teil (16) hat, der mit dem Entladeblatt (5) verbunden ist,
**dadurch gekennzeichnet,**
daß zweite Teile (18, 19) der ersten und zweiten hydraulischen Stellzylinder (12, 13) über eine Halteeinrichtung (20, 28, 29, 30) verbunden sind, die zur Bewegung längs eines vorgegebenen Weges gezwungen ist, der von einem länglichen Glied (3) bestimmt ist, mit dem sich die Halteeinrichtung (20, 28, 29, 30) im Eingriff befindet, und daß mindestens eines der zweiten Teile (18, 19) schwenkbar mit der Halteeinrichtung (20, 28, 29, 30) verbunden ist, wobei die ersten und zweiten Teile (14, 16, 18, 19) eines jeden Stellzylinders (12, 13) jeweils das eine und das andere Teil von Kolbenstange und Zylinder (14, 16, 18, 19) eines jeden Stellzylinders (12, 13) sind.

2. Fahrzeug nach Anspruch 1, wobei die Halteeinrichtung (20, 28, 29, 30) das längliche Glied (3) neben den zweiten Teilen (18, 19) beaufschlagt.

3. Fahrzeug nach Anspruch 1 oder 2, wobei der vorbestimmte Weg und der Bewegungsweg der Entladeblatt (5) nicht parallel sind.

4. Fahrzeug nach einem der Ansprüche 1 bis 3, wobei jeder der hydraulischen Stellzylinder (12, 13) einen doppelt wirkenden hydraulischen Stellzylinder aufweist.

5. Fahrzeug nach einem der Ansprüche 1 bis 4, wobei die Zylinder (14, 19) im wesentlichen Seite an Seite angeordnet sind.

6. Fahrzeug nach Anspruch 4 oder 5, wobei die hydraulischen Stellzylinder (12, 13) so angeordnet sind, daß sie entgegengesetzt wirken.

7. Fahrzeug nach einem der Ansprüche 1 bis 6, wobei die Zuström- und Rücklaufseiten der hydraulischen Stellzylinder (12, 13) so miteinander verbunden sind, daß während des Arbeitens eines jeden Stellzylinders hydraulisches Druckmittel einer Seite des Stellzylinders zugeführt und hydraulisches Druckmittel von der anderen Seite des Stellzylinders abgeführt wird.

8. Fahrzeug nach Anspruch 6 und 7, wobei die hydraulischen Stellzylinder (12, 13) gleiche Kapazitäten haben, so daS während des Arbeitens der Stellzylinder zum Verfahren des Entladeblattes (5) von einem Ende der Karosserie (2) zum anderen der Nettoverbrauch von hydraulischem Druckmittel durch die hydraulischen Stellzylinder (12, 13) im wesentlichen gleich Null ist.

9. Fahrzeug nach einem der Ansprüche 1 bis 8, wobei das Entladeblatt (220) oder die Entladewand einen unteren Teil (226), der in der Karosserie zur gleitenden Längsbewegung von einem Ende zu ihrem entgegengesetzten Ende gleitend gelagert ist, und einen oberen Teil (230) aufweist, der schwenkbar mit dem unteren Teil zu einer Schwenkbewegung relativ zu diesem um eine Achse verbunden ist, die sich quer zu dem Fahrzeug von einer geneigten zu einer aufrechten Stellung erstreckt.

10. Fahrzeug nach einem der vorhergehenden Ansprüche, das ein Anhänger (1) ist.

11. Fahrzeug nach Anspruch 10, wobei das längliche Glied (3) mindestens einen Teil einer Zugstangenanordnung (3) des Anhängers (1) ist.

12. Fahrzeug nach Anspruch 10 oder 11, wobei mindestens einer der hydraulischen Stellzylinder (12, 13) zumindest teilweise in einer Zugstangenanordnung (3) des Anhängers (1) eingeschlossen ist.

13. Fahrzeug nach einem der vorhergehenden Ansprüche, das ein schwenkbar an einem Ende der Karosserie (2) gelagertes Tor (6) und eine Einrichtung (8) zum automatischen Öffnen und Schließen des Tores synchron mit der gleitenden Bewegung des Blattes (5) durch die Karosserie (2) hindurch umfaßt.

14. Fahrzeug nach Anspruch 13, wobei die Einrichtung zum Öffnen und Schließen des Tores einen hydraulischen Stellzylinder (8) aufweist.

15. Fahrzeug nach einem der vorhergehenden Ansprüche, das eine Abgabeeinrichtung (63) aufweist, die an einem Ende der Karosserie (2) angeordnet und so ausgebildet ist, daß sie Material aus der Karosserie (2) abgibt, welches Material zu der Abgabeeinrichtung (63) hin bei deren Benutzung von dem Entladeblatt (5) gezwungen wird.

16. Fahrzeug nach Anspruch 15, wobei die Abgabeeinrichtung einen Rotor (65) aufweist, der zum Abgeben von Stroh, Heu oder ähnlichem Material aus der Karosserie (2) angeordnet ist.

17. Fahrzeug nach Anspruch 15, wobei die Abgabeeinrichtung eine schwingende Abgabenase (190) aufweist, die zur Schwerkraftzuführung mit und zum Abgeben von Dünger oder einem anderen teilchenförmigen Material aus der Karosserie (2) angeordnet ist.

18. Fahrzeug nach Anspruch 15, 16 oder 17, wobei die Abgabeeinrichtung (63) von der Karosserie (2) leicht abnehmbar ist.

**19.** Fahrzeug nach einem der vorhergehenden Ansprüche, das eine Einrichtung zum Überwachen der Größe einer Kraft umfaßt, die auf eine Endwand der Karosserie (2) oder einen Teil (6), der an einem Ende der Karosserie (2) befestigt ist, aufgebracht wird, und eine Stoßkraft, die auf das Entladeblatt (5) aufgebracht wird, derart steuert, daß die auf die Endwand oder das Teil (6) aufgebrachte Kraft unterhalb eines vorgegebenen Wertes gehalten wird.

**20.** Fahrzeug nach einem der vorhergehenden Ansprüche, das eine Tandemaxelanordnung (178) und eine Einrichtung zum wahlweisen Zwingen entweder der vorderen oder hinteren Axel der Tandemaxel (178) vorzugsweise in Richtung zum Boden umfaßt.

**21.** Fahrzeug nach einem der vorhergehenden Ansprüche, wobei die Halteeinrichtung (20, 28, 29, 30) Rollen (29, 30) aufweist, die Anschlagflächen innerhalb des länglichen Gliedes (3) beaufschlagen, um die Halteeinrichtung (20, 28, 29, 30) während ihrer Bewegung längs des vorbestimmten Weges zu führen.

Fig.1.

Fig.2.

Fig.3.

33

34

4

34

36

31

33

36

32

35

31  32  75  35

Fig.4.

56  57  2

5

Fig.8.

54  53

55

Fig.5.

Fig.6.

Fig.7.

Fig.9.

Fig.10.

Fig.11.

EP 0 277 733 B1

Fig.12.

EP 0 277 733 B1

*Fig.13.*

EP 0 277 733 B1

Fig.14.

101

102

189

190

178  179  180

Fig.15.

187  185  187

188  188

184

190

EP 0 277 733 B1

Fig.16.

EP 0 277 733 B1

Fig.18.

Fig.17.

EP 0 277 733 B1

Fig.19.

Fig.20.

Fig.21.

EP 0 277 733 B1